Europäisches Patentamt

European Patent Office

Office européen des brevets

(19)

(11) Publication number: **0 052 907**
**B1**

(12) # EUROPEAN PATENT SPECIFICATION

(45) Date of publication of patent specification: **20.03.85**

(51) Int. Cl.⁴: **C 02 F 1/46**

(21) Application number: **81201302.7**

(22) Date of filing: **24.11.81**

(54) **Process for the detoxification of chemical waste materials.**

(30) Priority: **25.11.80 NL 8006412**

(43) Date of publication of application:
**02.06.82 Bulletin 82/22**

(45) Publication of the grant of the patent:
**20.03.85 Bulletin 85/12**

(84) Designated Contracting States:
**AT BE CH DE FR GB IT LI LU NL SE**

(56) References cited:
**EP-A-0 010 562**
**GB-A-1 570 122**
**US-A-3 730 864**
**US-A-3 766 035**
**US-A-3 959 131**

(73) Proprietor: **NEDERLANDSE CENTRALE
ORGANISATIE VOOR TOEGEPAST-
NATUURWETENSCHAPPELIJK ONDERZOEK
Juliana van Stolberglaan 148
NL-2595 CL The Hague (NL)**

(72) Inventor: **van Duin, Pieter Johannes
van Hardenbroekweg 16
NL-2202 EE Noordwijk (NL)**
Inventor: **van Erkel, Joost
Kamillenplaats 11
NL-3181 RJ Rozenburg (NL)**

(74) Representative: **Plaisier, Aart
Nederlandsch Octrooibureau Johan de Wittlaan
15 P.O. Box 29720
NL-2502 LS 's-Gravenhage (NL)**

Courier Press, Leamington Spa, England.

**Description**

The invention relates to a process for the treatment of waste materials, containing noxious organic substances.

US patent 3,959,131 describes a process in which a flow of polluted raw waste water is first treated with a coagulant, and is subsequently rapidly mixed with very fine bubbles supplied beneath the waste water flow and may then be treated with a flocculant, after which the pollutants are separated from the water by skimming off the surface of the waste water.

Non-prepublished European patent application 0041480 describes a process for the separation of oil in water emulsions by electrolysis. Said emulsions may contain tensides. According to said process the emulsions are subjected to an electrolysis at a pH value of 5—10 and a voltage difference between the electrodes of at least 1.5 volts, optionally in the presence of a coagulant, forming separate oil particles, said oil particles being flottated by means of hydrogen which is simultaneously produced at a cathode and subsequently separating the oil phase obtained which can optionally be concentrated by means of floculation agents.

The known processes are suffering from certain disadvantages, a further separation of two layers is necessary, for instance.

In countries in which industrial activities take place, large quantities of chemical waste materials are produced per annum, of which part is not processed, for example, because the processing is too expensive or for lack of processing technology.

These unprocessed quantities of waste materials are a.o. stored in mines or dumped in the earth, in oceans, lakes or rivers. This would not be detrimental, if not these waste materials frequently would contain substantial amounts of toxic compounds, which pose a direct threat to flora and fauna if they are released in the environment. For this reason the authorities are less and less inclined to allow dumping of dangerous chemical waste materials.

There is a further need for a convenient method for treating such waste materials.

A process for the electrolytic treatment of waste flows comprising toxic compounds is further described in European patent application No. 10,562.

It has now been found out that waste materials containing noxious organic substances can be treated electrolytically more selectively and with a lower consumption of energy still resulting in detoxification of the noxious compounds by subjecting them to electrolytical treatment by contacting them with one or more electrodes, which are part of an electrical circuit, in the presence of micelle-forming material. In this process a separation of two phases is not necessary. It appears, that the noxious compounds are detoxificated by this process and not need to be separated off.

For satisfactory results only minor amounts of the micelle-forming material need to be added. Preferably a quantity of micelle-forming material per 1 waste is used, amounting to 1—100 ppm of waste. The use of a micelle-forming material has already resulted in a decrease in the consumption of energy of 45%.

Compounds belonging to the classes of cationic, anionic and non-ionic micelle-forming compounds may be used. Micelle-forming compounds providing best results belong to the group consisting of ethyldodecyldimethylammoniumchloride, octadecyltrimethylammoniumchloride, sodium dodecylbenzenesulphonate, dioctyl sodium sulphosuccinate, sodium perfluoroalkylbenzenesulphonate, octylphenoldecaethyleneglycol ether, methyldodecylbenzyltrimethylammoniumchloride and methyldodecylxylylene-bistrimethylammoniumchloride, or a mixture of two or more of these compounds. Preferably octadecyltrimethylammoniumchloride or a mixture of quaternary ammonium salts, known under the trade name Hyamine 2389, is used.

From experimental results it has appeared that suprisingly the type of electrode (anode or cathode), along which the waste material that is to be detoxified is passed, determines which type of toxicity is to be diminished or eliminated. Types of toxicity are, for example, mutagenity, genotoxicity, carcinogenity and algae toxicity (the degree of toxicity of a material to algae).

From biological experiments with algae (organisms which occur, for example in oceans, lakes and rivers, and which play an important part in the food-cycle) it has appeared that surprisingly the algae toxicity decreases sharply, when the waste material is passed along the anode. In addition the mutagenity decreases.

The mutagenity is determined by means of the Ames-test, B.N. Ames et al, Mutation Research, Vol. 31, 1975, pp. 347—364. The anode material is preferably titanium or lead dioxide. The cathode material is preferably lead.

The combination of cathodic and anodic electrodes will in some cases provide an even better result. Mutagenity and algae toxicity both decrease considerably. As electrode material carbon fibres are preferably used. In this context the term "carbon fibres" also encompasses graphite fibres. This is a material meeting many demands. It may be, for example, pyrolytic graphite in fibre form and having a fibre diameter of $10^{-3}$ cm, the specific surface area amounting to 4000 $cm^2/cm^3$.

The process according to the present invention appears to be suitable for use in the detoxification of toxic halogenated hydrocarbons and in particular for depoisoning chlorinated hydrocarbons. Halogenated hydrocarbons, which may be treated with good results, belong to the group consisting of

2

halogenated aromatic compounds, aliphatic compounds, phenolic compounds, aniline compounds and ethers and derivatives of halocyanides and their sulphonated products. The process according to the invention provides best results when the amount of halogenated hydrocarbons is $1—10^5$ ppm of waste material. The process may also be applied successfully for waste materials comprising toxic compounds which contain nitro-groups.

The invention is further elucidated by means of the following Examples which do not constitute a limitation to the invention.

Examples I, II, III and IV relate to a waste material consisting substantially of diluted sulphuric acid and dissolved therein organic compounds, originating from the sulphonation and nitration of various benzene- and naphthalene derivatives, among which are also chlorinated compounds. This waste comprises micelle-forming material.

The composition of the waste material is presented below. The total concentration of dissolved organic compounds amounts to 10 g/l of waste material (10,000 ppm on waste material).

Distribution in % by weight

| | |
|---|---|
| —anthraquinonesulphonic acids | 57.7 |
| —substituted benzene- and naphthalenesulphonic acids | 32.5 |
| —oxidative and sulphonated decomposition products of phthalic acid, parachlorophenol, phthalocyanine and substituted diaminoanthraquinones | 7 |
| —substituted anthraquinone derivatives | 1.3 |
| —oxidative decomposition products formed during the preparation of di-/trianthrimide | 1 |
| —chlorine in organic compounds at least | 0.35 |

The waste material had a toxicity with respect to the algae Phaeodactylum of 0.03%, expressed in percentage no effect concentration, i.e., that a solution containing an amount of waste material of 0.03% by weight shows no toxic effect with respect to the algae. As a consequence of the salt content, formed during neutralization, it was not possible to measure lower toxicities than that corresponding to 1% no effect concentration.

In addition the waste material was highly mutagenic. The mutagenity was determined according to the Ames-test with the strain TA 98 of the bacterium *Salmonella typhemurium* in the presence of homogenized rat liver, obtained from rats which had been treated with Aroclor 1254. The mutagenity is given as + or o marks in Examples I, II, III and IV. More + marks indicate a higher mutagenity, whereas the o-mark is used to indicate that no mutagenity was found.

Example I

100 ml of the waste material were introduced into the cathode compartment of an electrochemical reactor. The cathode was made of carbon fibres and was separated from the anode compartment, comprising a platinum anode, by a membrane permeable for cations. The anode compartment was filled with 2 M sulphuric acid.

An electrical current of 3 A was passed through the reactor for 30 hours. At the end of this period the algae toxicity and the mutagenity were determined. The results are shown in the Table.

Example II

100 ml of the waste material were introduced into the anode compartment of an electrochemical reactor. The anode was made of carbon fibres and was separated from the cathode compartment, comprising a platinum cathode, by a membrane permeable for cations. The cathode compartment was filled with 2 M sulphuric acid.

An electrical current of 0.3 A was passed through the reactor for 140 hours. At the end of this period the algae toxicity and the mutagenity were determined. The results are shown in the Table.

Example III

60 ml of the waste material were introduced into an electrochemical reactor, comprising an anode and a cathode, both made of carbon fibres. This reactor thus did not contain a membrane or a diaphgram, thus allowing mixing of liquids, which had been in contact with anode and cathode. An electrical current of 0.3 A was passed through the reactor for 80 hours. At the end of this period the algae toxicity and the mutagenity were determined. The results are shown in the Table.

3

Example IV

670 ml of the waste material were introduced into an electrochemical reactor, comprising a lead cathode and a lead dioxide anode. The reactor thus did not contain a membrane of a diaphragm, thus allowing mixing of liquids, which had been in contact with anode and cathode.

An electrical current of 2.6 A was passed through the reactor for 10 hours. At the end of this period the algae toxicity and the mutagenity were determined. The results are shown in the Table.

TABLE

| Example | A | Duration of electrolysis (hours) | Algae toxicity (no effect concentration) | Mutagenity |
|---------|-----|------|------|-------|
| — | 0 | — | 0.03 | ++ |
| I | 3 | 30 | 0.10 | ++++ |
| II | 0.3 | 140 | 0.10 | +,o |
| III | 0.3 | 80 | 1 | o |
| IV | 2.6 | 10 | 0.10 | o |

Examples V, VI, VII, VIII and IX represent tests showing the suitability of the present process for diminishing the concentration of toxic compounds in an aqueous solution. For comparison use is made of pentachlorophenol, as a standard, pentachlorophenol being a known toxic compound having an LD50 (for the rat, orally in mg/kg) of about 50.

Example V (comparison, without micelle forming material)

A solution of 0.1 M sodium sulphate, in which pentachlorophenol had been dissolved to a concentration of 50 mg/l was circulated through the cathode compartment of a circulation reactor. The cathode was made of carbon fibres. The anode was made of platinum wire netting. A solution of 0.1 M sodium sulphate was circulated through the anode compartment. The anode and cathode compartments were separated from each other by means of a diaphragm. An electrical current of 2 A was passed through the reactor. The concentration of pentachlorophenol had been decreased to half the initial value after 30 min of electrolysis.

Example VI

The method of Example V was repeated but octadecyltrimethylammoniumchloride was added to the solution to a concentration of 6 mg/l. The concentration of pentachlorophenol had been decreased to half the initial value after 17 min of electrolysis.

Example VII (comparison, without micelle forming material)

A solution of 0.1 M sodium sulphate, in which pentachlorophenol had been dissolved to a concentration of 50 mg/l, was circulated through a compartment of an electrochemical circulation reactor. This compartment comprised an electrode made of carbon fibres and was separated from the other compartment by means of a diaphragm. A solution of 0.1 M sodium sulphate was circulated through this other compartment, comprising an electrode made of platinum wire netting. Through this reactor an electrical current was passed, which alternated its direction every 30 sec in such a manner that alternately an anodic current of 0.1 A and a cathodic current of 0.1 A passed through the carbon fibre electrode. The concentration of pentachlorophenol had been decreased to half its initial value after 22 min of electrolysis.

Example VIII

The method of Example VII was repeated but octadecyltrimethylammoniumchloride was added to the solution to a concentration of 6 mg/l. The concentration of pentachlorophenol had been decreased to half its initial value after 15 min of electrolysis.

Example IX

The method of Example VII was repeated but a mixture of methyldodecylbenzyltrimethylammoniumchloride and methyldodecylxylylene-bistrimethylammoniumchloride was added to the solution to a concentration of 10 mg/l. The concentration of pentachlorophenol had been decreased to half its initial value after 13 min of electrolysis.

**Claims**

1. A process for the treatment of waste materials, containing noxious organic substances, characterized by detoxification of the noxious compounds by subjecting them to electrolytical treatment by contacting them with one or more electrodes, which are part of an electrical circuit, in the presence of micelle-forming material.

2. A process according to claim 1, characterized in that the quantity of micelle-forming material amounts to 1—100 ppm of waste material.

3. A process according to claim 1 or 2, characterized in that the micelle-forming material is a member of the group consisting of methyldodecylbenzyltrimethylammoniumchloride, methyldodecyl-xylylene-bistrimethylammoniumchloride, ethyldodecyldimethylammoniumchloride, octadecyl-trimethylammoniumchloride, sodium dodecylbenzenesulphonate, sodium dioctylsulphosuccinate, sodium perfluoroalkylbenzenesulphonate, octylphenoldecaethyleneglycol ether and mixtures of at least two of these compounds.

4. A process according to any one of the preceding claims, characterized in that the waste material is passed along the anode.

5. A process according to claim 4, characrerized in that the anode is made of titanium or lead dioxide.

6. A process according to any one of claims 1—3, characterized in that the waste material is passed along the cathode.

7. A process according to claim 6, characterized in that the cathode is made of lead.

8. A process according to any one of claims 1—3, characterized in that the waste material is passed along both the cathode and the anode.

9. A process according to any one of claims 4, 6 and 8, characterized in that the electrode is made of carbon fibres.

10. A process according to any one of the preceding claims, characterized in that the noxious organic compounds are halogenated hydrocarbons which are a member of the group consisting of halogenated aromatic compounds, aliphatic compounds, phenolic compounds, aniline compounds and ethers and halocyanides and their sulphonated products.

11. A process according to claim 10, characterized in that the quantity of halogenated hydrocarbon amounts of 1—$10^5$ ppm of waste material.

12. A process according to any one of claims 1—9, characterized in that the noxious organic compounds contain nitro groups.

**Patentansprüche**

1. Verfahren zur Behandlung von Abfällen mit schädlichen organischen Substanzen, dadurch gekennzeichnet, daß man die schädlichen Verbindungen durch Elektrolysebehandlung entgiftet, indem man sie in Gegenwart eines Mizellen bildenden Materials mit einer oder mehreren Elektrode(n), die Teil eines elektrischen Schaltkreises ist (sind), in Berührung bringt.

2. Verfahren nach Anspruch 1, dadurch gekennzeichnet, daß die Menge in Mizellen bildendem Material 1—100 ppm des Abfallmaterials beträgt.

3. Verfahren nach Ansprüchen 1 oder 2, dadurch gekennzeichnet, daß das Mizellen bildende Material aus Methyldodecylbenzyltrimethylammoniumchlorid, Methyldodecylxylylen-bistrimethylammoniumchlorid, Ethyldodecyldimethylammoniumchlorid, Octadecyltrimethylammoniumchlorid, Natriumdodecylbenzolsulfonat, Natriumdioctylsulfosuccinat, Natriumperfluoralkylbenzolsulfonat, Octylphenoldecaethylenglykolether oder einer Mischung aus mindestens zwei dieser Verbindungen besteht.

4. Verfahren nach einem der vorhergehenden Ansprüche, dadurch gekennzeichnet, daß das Abfallmaterial längs der Anode passierengelassen wird.

5. Verfahren nach Anspruch 4, dadurch gekennzeichnet, daß die Anode aus Titan oder Bleidioxid besteht.

6. Verfahren nach einem der Ansprüche 1 bis 3, dadurch gekennzeichnet, daß das Abfallmaterial längs der Kathode passierengelassen wird.

7. Verfahren nach Anspruch 6, dadurch gekennzeichnet, daß die Kathode aus Blei besteht.

8. Verfahren nach einem der Ansprüche 1 bis 3, dadurch gekennzeichnet, daß das Abfallmaterial längs der Kathode und der Anode passierengelassen wird.

9. Verfahren nach einem der Ansprüche 4, 6 und 8, dadurch gekennzeichnet, daß die Elektrode aus Kohlefasern besteht.

10. Verfahren nach einem der vorhergehenden Ansprüche, dadurch gekennzeichnet, daß die schädlichen organischen Verbindungen aus halogenierten Kohlenwasserstoffen, nämlich halogenierten aromatischen Verbindungen, aliphatischen Verbindungen, Phenolverbindungen, Anilinverbindungen und Ethern, Halogencyaniden und deren Sulfonierungsprodukten bestehen.

11. Verfahren nach Anspruch 10, dadurch gekennzeichnet, daß die Menge an halogeniertem Kohlenwasserstoff 1—$10^5$ ppm des Abfallmaterials beträgt.

**0 052 907**

12. Verfahren nach einem der Ansprüche 1 bis 9, dadurch gekennzeichnet, daß die schädlichen organischen Verbindungen Nitrogruppen enthalten.

**Revendications**

1. Procédé pour le traitement de matériaux de déchet contenant des substances organiques nocives, caractérisé par le fait que l'on réalise une détoxification des produits nocifs par traitement électrolytique an les mettant en contact avec une ou plusieurs électrodes qui font partie d'un circuit électrique, en présence d'un matériau formant des micelles.

2. Procédé selon la revendication 1, caractérisé en ce que la quantité de matériau formant des micelles s'élève à 1—100 ppm par rapport au matériau de déchet.

3. Procédé selon la revendication 1 ou 2, caractérisé en ce que le matériau formant des micelles est un membre du groupe constitué par le chlorure de méthyldodécylbenzyltriméthylammonium, le chlorure de méthyldodécylxylylène-bistriméthylammonium, le chlorure d'éthyldodécyldiméthyl-ammonium, le chlorure d'octadécyltriméthylammonium, le dodécylbenzènesulfonate de sodium, le dioctylsulfosuccinate de sodium, le perfluoroalkylbenzènesulfonate de sodium, l'éther d'octylphénol-décaéthylèneglycol et les mélanges d'au moins deux de ces composés.

4. Procédé selon l'une quelconque des revendications précédentes, caractérisé par le fait que l'on fait passer le matériau de déchet le long de l'anode.

5. Procédé selon la revendication 4, caractérisé en ce que l'anode est faite de titane ou de dioxyde de plomb.

6. Procédé selon l'une quelconque des revendications 1—3, caractérisé en ce que l'on fait passer le matériau de déchet le long de la cathode.

7. Procédé selon la revendication 6, caractérisé en ce que la cathode est faite de plomb.

8. Procédé selon l'une quelconque des revendications 1—3, caractérisé en ce que l'ou fait passer le matériau de déchet à la fois le long de la cathode et de l'anode.

9. Procédé selon l'une quelconque des revendications 4, 6 et 8, caractérisé en ce que l'électrode est faite de fibres de carbone.

10. Procédé selon l'une quelconque des revendications précédentes, caractérisé en ce que les composés organiques nocifs sont des composés hydrocarbonés halogénés qui font partie du groupe constitué par les composés halogénés aromatiques, aliphatiques, phénoliques, anilinés et des éthers ainsi que des halocyanures, et leurs produits sulfonés.

11. Procédé selon la revendication 10, caractérisé en ce que la quantité de composé hydrocarboné halogéné s'élève à $1—10^5$ ppm par rapport au matériau de déchet.

12. Procédé selon l'une quelconque des revendications 1—9, caractérisé en ce que les composés organiques nocifs contiennent des groupements nitro.

6